# NEUE EUROPÄISCHE PATENTSCHRIFT

(11) **EP 2 283 231 B2**
(45) Veröffentlichungstag und Bekanntmachung des Hinweises auf die Entscheidung über den Einspruch: **08.03.2017**
(45) Hinweis auf die Patenterteilung: 07.03.2012
(21) Anmeldenummer: 09737720.4
(22) Anmeldetag: 08.04.2009
(51) Int. Cl.: F03D 1/06

(54) **VERFAHREN ZUR FERTIGUNG EINES BLATTANSCHLUSSES EINES ROTORBLATTS, EIN BLATTANSCHLUSS UND EIN BEFESTIGUNGSELEMENT FÜR EINEN BLATTANSCHLUSS**
METHOD FOR ESTABLISHING A BLADE CONNECTION OF A ROTOR BLADE, A BLADE CONNECTION AND A SECURING ELEMENT FOR A BLADE CONNECTION
PROCÉDÉ DE FABRICATION D'UN RACCORD DE PALE DE ROTOR, RACCORD DE PALE ET ÉLÉMENT DE FIXATION POUR UN RACCORD DE PALE

(30) Priorität: 29.04.2008 DE 102008021498
(43) Veröffentlichungstag der Anmeldung: 16.02.2011
(73) Patentinhaber: Senvion GmbH, 22297 Hamburg (DE)
(72) Erfinder: BENDEL, Urs, 24787 Fockbek (DE); WERNER, Markus, 24103 Kiel (DE); KNOPS, Martin, 24787 Fockbek (DE)
(74) Vertreter: Groth, Wieland
(86) Internationale Anmeldenummer: PCT/DE2009/000488
(87) Internationale Veröffentlichungsnummer: WO 2009/132612

(56) Entgegenhaltungen:
- EP-A- 1 486 415
- EP-A- 1 596 064
- WO-A-01/42647
- WO-A-03/057457
- WO-A1-2004/110862
- WO-A1-2006/070171
- DK-A- 148 088
- FR-A- 2 863 321
- JP-A- H08 270 540
- JP-A- H11 182 408

## Beschreibung

Die Erfindung betrifft ein Verfahren zur Fertigung eines Blattanschlusses eines Rotorblattes für eine Windenergieanlage, der auf einem Kreisbogen vorzugsweise äquidistant zueinander vorgesehene Befestigungselemente zur Befestigung des Blattanschlusses an einer Nabe aufweist.

Des Weiteren betrifft die Erfindung einen Blattanschluss und ein Befestigungselement für einen Blattanschluss.

Ein Verfahren, ein Blattanschluss und ein Befestigungselement der oben genannten Gattungen sind prinzipiell aus der EP 1 486 415 A1 bekannt.

Aus der WO 03/057457 A1 ist ein Befestigungselement für ein Rotorblatt bekannt, das zwei gekrümmte Außenflächen aufweist, die es ermöglichen, eine Vielzahl von Befestigungselementen kreisförmig entlang der Rotorblattwurzel anzuordnen.

Der Erfindung liegt die Aufgabe zugrunde, die Befestigung eines Rotorblattes an der Nabe einer Windenergieanlage sowie auch die Fertigung und / oder Bereitstellung eines geeigneten Blattanschlusses zu verbessern.

Diese Aufgabe wird in Verfahrenshinsicht erfindungsgemäß dadurch gelöst, dass stückig ausgebildete Befestigungselemente auf dem Kreisbogen angeordnet und mit Abstandselementen voneinander beabstandet werden.

An dieser Stelle sei zudem darauf hingewiesen, dass ein "Kreisbogen" nicht genau einem Kreisverlauf folgen muss, insbesondere nicht unbedingt bei der Herstellung des erfindungsgemäßen Blattanschlusses. Zwar ist es wünschenswert, im Ergebnis einen möglichst kreisrunden und vollständig kreisförmigen Blattanschluss bereitzustellen, da dieser besonders stabil ist und für in der Anschlussebene isotrope Kraft- und Momentenübertragungen sorgen kann, jedoch kann es bei der Fertigung des Blattanschlusses, der insbesondere auch aus Kreissegmenten gefertigt und zusammengefügt werden kann, vorteilhaft sein, in der Fertigungsform eine von einem Kreisbogen abweichende Form, insbesondere eine aufgespreiztere Form, zu wählen, um so einer bei der Fertigung und / oder später auftretenden Formänderung eines Blattanschlussteils bereits Rechnung zu tragen, indem durch eine geschickte Fertigungsformwahl eventuelle Formänderungen des Blattanschlussteiles dann erst recht selbständig zu einer idealen Kreisform führen.

Allgemein hat ein Blattanschluss eines Rotorblatts die Aufgabe, Kräfte und Momente vom Rotorblatt in eine Nabe einzuleiten und zu übertragen. Dieser Aufgabe wird der erfindungsgemäße Blattanschluss besonders gut gerecht, wobei er zudem relativ einfach und kostengünstig, insbesondere auch in Serie mit großer Stückzahl, gefertigt werden kann.

Insbesondere können auf dem Kreisbogen verteilt durch eine dichtere Platzierung, bei der sich erfindungsgemäß vorzugsweise mit Vorteil jeweils ein Befestiguhgselement und ein Abstandshalter im Verlauf des Kreisbogens abwechsein, mehr Befestigungselemente auf einer Länge des Kreisbogens untergebracht werden. Dadurch wird die Befestigung des Blattanschlusses an der Nabe stabiler oder kann mehr Kräfte Obertragen, oder, es kann bei gleicher Anzahl von Befestigungselementen der Kreisbogen in seinem Radius kleiner gewählt werden und damit Material gespart werden. Besonders günstige Platzierungen und dichte Packungen der Befestigungselemente sind nach Weiterbildungen der Erfindung möglich, die sich dadurch auszeichnen, dass ein Befestigungselement verwender wird, das einen im Wesentlichen etwa viereckigen, vorzugsweise rechteckigen, Querschnitt in einer Anschlussebene oder parallel dazu aufweist, dass ein Befestigungselement verwendet wird, das einen im Wesentlichen etwa quadratischer Querschnitt aufweist oder dass ein trapezförmiger Querschnitt mit einer zum Kreisbogen radial inneren verjüngten Seite verwendet wird, und / oder dass ein im Wesentlichen etwa leistänförmiges Abstandselement verwendet wird, das etwa senkrecht zu einer Anschlussebene orientiert wird, wobei dieses Abstandselement einen etwa T-förmigen oder hufnagelförmigen Querschnitt oder einen etwa trapezförmigen Querschnitt aufweisen kann.

Die Abstandshalter zwischen den Befestigungselementen nehmen bei einem Ovalisieren oder anderen Belastungsverformungen des Rotorblattes Belastungsverformungen in sich auf. Die Abstandshalter sollen dazu eine geringe Steifigkeit in ihrer Dickenrichtung aufweisen, damit sie unter Verformung wenige Spannungen erzeugen und so die Verformungen ausgleichen. Gleichzeitig ist hohe Steifigkeit in Längsrichtungen vorteilhaft, damit die Abstandshalter ebenfalls Last aus dem Rotorblatt in Befestigungselemente übertragen.

Bei rechteckigen oder quadratischen Querschnitten der Befestigungselemente können die Abstandshalter durch geeignete Formgebung, insbesondere die erwähnte Trapezform, eine gleichmäßige Spaltbreite zwischen den auf einer Kreisform angeordneten Befestigungselementen sicherstellen.

Derartige Formgebungen haben zudem den Vorteil; dass die Befestigungselemente und Abstandshalter dabei glätte Außen- und Innenflächen bilden, so dass sie insbesondere, wie nach einer Weiterbildung der Erfindung vorgesehen, besonders gut und einfach durch Laminieren miteinander verbunden werden können, wobei vorzugsweise ausreichend sein kann, dass (nur) an der radial inneren Seite und an der radial äußeren Seite der Anordnung ein Laminat aufgebracht wird. Bei diesem Laminat können vorzugsweise an sich bekannte Glasfaser- und / oder Kohlefaserstrukturen verwendet werden. Zusätzlich kann vorzugsweise vorgesehen sein, dass wenigstens ein Befestigungselement und wenigstens ein Abstandselement mit einer Harzfüllung in einem von ihnen gebildeten Zwischenraum miteinander verbunden werden, insbesondere verklebt werden, um der Anordnung zusätzlich Haltbarkeit als Verbund zu geben und Kräfte- und Momenteninlekungen und - übertragungen weiter zu verbessern. Bei der Fertigung kann insbesondere vorgesehen werden, dass wenigstens eine Abdichtung zur Harzsperrung eines nicht für einen Harzeintntt gewünschten Bereiches vorgesehen wird, wofür zum Beispiel an geeigneten Stellen Dichtungen, zum Beispiel in Form von O-Ringen vorgesehen werden können.

Bei der Fertigung eines erfindungsgemäßen Blattanschlusses kann es mit Vorteil vorzugsweise vorgesehen sein, dass wenigstens eine Positioniereinrichtung zur Positionierung wenigstens eines Befestigungselementes, vorzugsweise vor und während einer Fixierung des Befestigungselementes in dem Blattanschluss vorgesehen ist. Die Befestigungselemente werden dabei bevorzugt während der Fertigung des Blattanschlusses in geeigneter Weise positioniert und gehalten bis sie im Blattanschluss fest sind. Dazu wird bevorzugt im Wesentlichen eine Harzinfusionstechnik bzw. Vakuuminjektionstechnik verwendet, so dass die Befestigungselemente positioniert und gehalten werden könnten; bis der im Wesentlichen etwa hülsenförmige oder schalenförmige Blattanschluss oder Blattanschlussteil ausgehärtet ist und die Befestigungselemente dadurch positioniert fixiert sind. Die Positioniereinrichtung könnte zum Beispiel einen Flansch umfassen, gegen den die Befestigungselemente abgedichtet werden. Der Flansch könnte zum Beispiel auch wenigstens eine Passung für die Befestigungselemente aufweisen.

Eine andere Weiterbildung der Erfindung sieht vor, dass die Positioniereinrichtung außerhalb eines für die Harzinfusionstechnik benötigten Vakuum- oder Unterdruckbereiches platziert Wird und keine Beteiligung an dessen Abdichtung erfährt und der für den Blattanschluss vorgesehene Fertigungsbereich somit in gewissem Sinne autark abgedichtet wird. Insbesondere könnte es dafür ausreichend sein, dass zum Beispiel durch Abdichtungsbrücken von einer ansohlussseitigen Stirnseite eines Befestigungselementes bis zur Stirnseite des nächsten Befestigungselementes der Zwischenraum zwischen ihnen nach außen abgedichtet wird, also insbesondere das zwischen ihnen befindliche Abstandselement und die zwischen dem Abstandselement und den Befestigungselementen befindlichen Spalte, sowie auch Spalte zu den äußeren Laminatslagen oder -schichten.

Eine nächste Weiterbildung der Erfindung sieht vor, dass das oder jedes Befestigungselement insgesamt aus Metall gefertigt wird. Die erfindungsgemäßen Elemente werden also mit Vorteil insgesamt aus vollem Material blockförmig ausgebildet, so dass sie einfacher herstellbar, besser und einfacher platzierbar, besser und einfacher befestigbar, einbindbar oder einlaminierbar und stabiler sind.

Eine bevorzugte Ausführungsform der Erfindung zeichnet sich dadurch aus, dass ein Befestigungselement und / oder ein Abstandselement verwendet wird, Welches sich in einer Rotorblattspitzenrichtung verjüngt, so dass diese Elemente sich insbesondere zwischen Laminatlagen oder-schichten in Richtung eines Rotorblattverlaufs besser einschmiegen und verwurzeln. Diese könnte durch Formschlussformgebungen noch unterstützt werden. Die Verjüngung erfolgt vorzugsweise jeweils durch eine an der radialen Innenseite angeordnete, schräge Flanke. Eine nächste Weiterbildung der Erfindung sieht vor, dass ein Befestigungselement verwendet wird, welches ein Bolzenloch zur Einführung eines Verbindungselementes und / oder eines Positionierelementes aufweist.

Grundsätzlich könnte ein Befestigungselement eine männliche Ausbildung haben, also beispielsweise bereits einen Schraubbolzen zur Verschraubung des Blattanschlusses mit einer Nabe aufweisen, oder eine weibliche Ausbildung haben, indem es ein Bolzenloch, wie bei der vorgeschilderten, bevorzugten Ausbildung, umfast, oder es könnte zunächst eine neutrale Ausbildung haben und erst nach der Fertigung des Blattanschlusses, zum Beispiel mit einem Gewindeschnelder, ein Schraubgewindeloch erhalten. Die weibliche Form wird jedoch aus konstruktiven und fertigungstechnischen Gründen bevörzugt.

In das bevorzugt vorhandene Bolzenloch kann zu Befestigung des Blattanschlusses an der Nabe ein Schraubbolzen eingeschraubt werden oder zum Beispiel auch sogenannte T- Bolzen eingesetzt werden. Während der Fertigung kann das Botzenloch bevorzugt zur Positionierung und Halterung des Befestigungselementes dienen, indem dort ein Positionierdorn oder Ähnliches, vorzugsweise mit Konusform, eingeführt wird. Zur sicheren Einführung könnte das Bolzenloch an dem der Anschlussebene abgewandten Ende einen Durchstich oder Freistich haben, also beispielsweise nicht selbst als Sackloch ausgebildet sein. Zudem vermindert ein Freistich eventuell auftretende Kerbspannuhgen. Insbesondere muss bei einer Vakuuminjektion vorgesehen sein, dass dieses Bolzenloch vor einem Harzeintritt geschützt und abgedichtet ist. Dies könnte durch eine im Wesentlichen O-förmige Dichtung koaxial um das Bolzenloch und einen Positionierdorn und in einem Abstand dazu erfolgen.

Das Bölzenloch kann, wie bereits erwähnt, ein Innenschraubengewinde aufweisen. Dieses kann geschnitten sein oder umgeformt werden, Um insbesondere durch Einbringen von Druckeigenspannungen höhere dynamische Festigkeiten zu erhälten.

Als Metall für die Befestigungselemente kommt vor allem Stahl in Betracht.

Eine andere Weiterbildung der Erfindung sieht mit besonderem Vorteil vor, dass der Blattanschluss als Teil, insbesondere als Einbau- oder Anbauteil, für ein später zu fertigendes Rotorblatt vorgefertigt wird. Insbesondere können also mehrer derartige Einbauteile, vorzugsweise in einer eigenen Harzinfusionsform, vorgefertigt, werden und danach als fertige Einbauteile in ein Rotorblatt bei dessen Fertigung eingebunden und miteinander verbunden werden, insbesondere in eine Harzinfusionsform für ein Rotorblatt eingelegt werden.

Wie bereits mehrfach im Vorhergehenden erwähnt, kann erfindungsgemäß vorgesehen sein, dass als Kreisbogen für den Blattanschluss ein geschlossener Kreis oder ein Segment davon, insbesondere ein Halbkreis, gewählt wird.

Entsprechend kann erfindungsgemäß vorgesehen sein, dass das Rotorblatt, je nach Kreisbogen des Blattanschlusses, einen Blattanschluss oder mehrere derartige Blattanschlüsse erhält derart, dass das fertige Rotorblatt eine vollkreisige Anschlusswurzel für den Anschluss an eine Nabe aufweist.

Eine weitere Weiterbildung der Erfindung zeichnet sich dadurch aus, dass der Blattanschluss von einer Anschlussebene in Rotorblattspitzenrichtung unsymmetrisch bezüglich einer Kreisbogenachse ausgebildet ist. Insbesondere kann erfindungsgemäß mit Vorteil vorgesehen sein, dass der Blattanschluss als Einbau- oder Anbauteil in seinem freien Endbereich bereits einen Teil einer Tragflächen-oder Flügelform für das Rotorblatt bzw. des Rotorblatts bereitstellt.

Eine andere Weiterbildung der Erfindung sieht vor, dass der Blattanschluss bei seiner Fertigung wenigstens in einem Teilbereich mit einer Abreißfolie versehen wird, die nach ihrem Wiederabreißen eine kontinuierliche, aber raue Oberfläche hinterlässt, die weiterbehandelbar, insbesondere lackierbar, ist.

Für einen Blattahsdhluss eines Rotorblattes für eine Windenergieanlage, der auf einem Kreisbogen, vorzugsweise äquidistant zueinander vorgesehene Befestigunselemente zur Befestigung des Blättanschlusses an einer Nabe aufweist, der sich in selbständiger Lösung der gestellten Aufgabe erfindungsgemäß dadurch auszeichnet, dass stückig ausgebildete Befestigungselemente auf dem Kreisbogen angeordnet und mit Abstandselementen voneinander beabstandet sind, wird auch selbständiger Schutz beansprucht. Die sich aus dieser erfindungsgemäßen Lösung und ihren Welterbildungen ergebenden Vorteile sind schon sinngemäß hinreichend im Zusammenhang mit dem erfindungsgemäßen Verfahren und seinen Weiterbildungen im Vorhergehenden erläutert worden.

Des Weiteren und ebenso wird auch für ein Befestigungselement eines Blattanschlusses eines Rotorblattes für eine Windenergleanlage, das in erfindungsgemäßer Lösung der gestellten Aufgabe gekennzeichnet ist durch einen im Wesentlichen etwa viereckigen, vorzugsweise etwa rechteckigen, Querschnitt in einer Anschtussebene oder parallel dazu, selbständiger Schutz beansprucht.

Ausführungsbeispiele, aus denen sich weitere erfinderische Merkmale ergaben können, auf die die Erfindung in ihrem Umfang aber nicht beschränkt ist, sind in der Zeichnung dargestellt. Es zeigen:
- Fig. 1: einen Ausschnitt aus der Anschlussfläche bzw. -ebene eines erfindungsgemäßen Blattanschlusses,
- Fig. 2: einen Längsschnitt durch ein Ausführungsbeispielt eines erfindungsgemäßen Befestigungselementes entlang einer in der Fig. 3 mit II - II bezeichneten Linie,
- Fig. 3: eine Draufsicht auf das Befestigungselement gem. Fig. 2,
- Fig. 4: eine Ausschnittvergrößerung des in Fig. 2 umrahmten Ausschnittes IV,
- Fig. 5: eine Seitenansicht eines Fertigungszuschnittes für ein Ausführungsbeispiel erfindungsgemäßer Abstandselemente und
- Fig. 6: eine Stimansicht eines weiteren Ausführungsbeispiels eines erfindungsgemäßen Abstandseiementes.

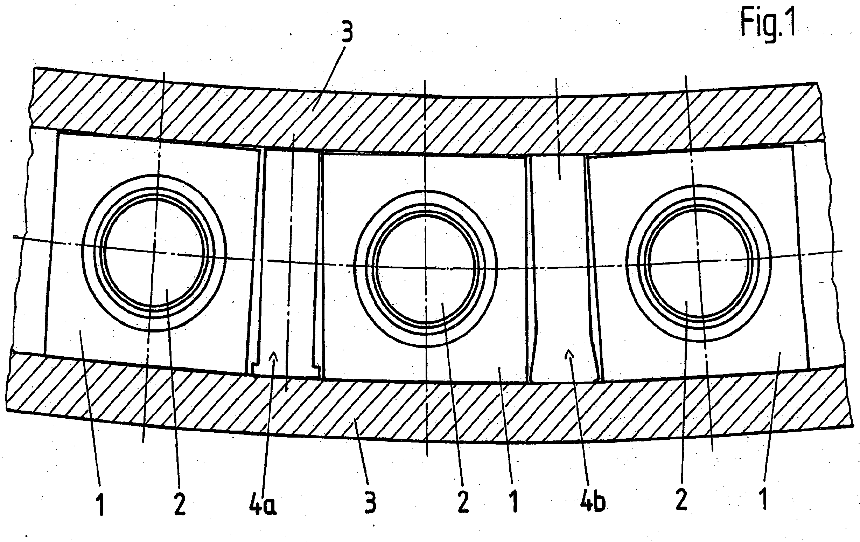

Fig. 1 zeigt einen Ausschnitt aus der Anschlussfläche eines erfindungsgemäßen Blattanschlusses.

Der gezeigte Ausschnitt folgt einem Kreissegment. Auf diesem Kreissegment sind mehrere erfindungsgemäße Befesfigungselemente 1 angeordnet, die in ihrer gezeigten Stirnansicht im Weseritlichen etwa quadratisch bzw. blockartig ausgebildet sind. Jedes der Befestigungselemente 1 enthält eine Bohrung 2 mit einem Innengewinde zur Einschraubung eines Bolzens oder einer Befestigungsschraube. Zwischen jeweils zweien der Befestigungselemente 1 ist jeweils ein Abstandselement 4 angeordnet, von denert in der Fig. 1 zwei Ausführungsbeispiele gezeigt sind, ein erstes Ausführungsbeispiel 4a mit einer etwa T-förmigen Stimfläche und ein zweites Ausführungsbeispiel 4b mit einer mehr hufnagelförmigen Stirnfläche. Zwischen den Abstandselementen 4 und den Befestigungselementen 1 verbleiben jeweils Spalte, die zum Beispiel mit Harz verfüllt werden können.

Zur Verbindung und Verfestigung des Kranzes aus Befestigungselementen 1 und Abstandselementen 4 sind eine innere und eine äußerte Lage eines Verbindungsmaterials 3, zum Beispiel eines Glasfasermaterials, vorgesehen, das zum Beispiel mit Harz durchtränkt und mit den anderen genannten Elementen verbunden werden kann, beispielsweise mittelt eines Infusionsverfahrens oder eines Injektionsverfahrens.

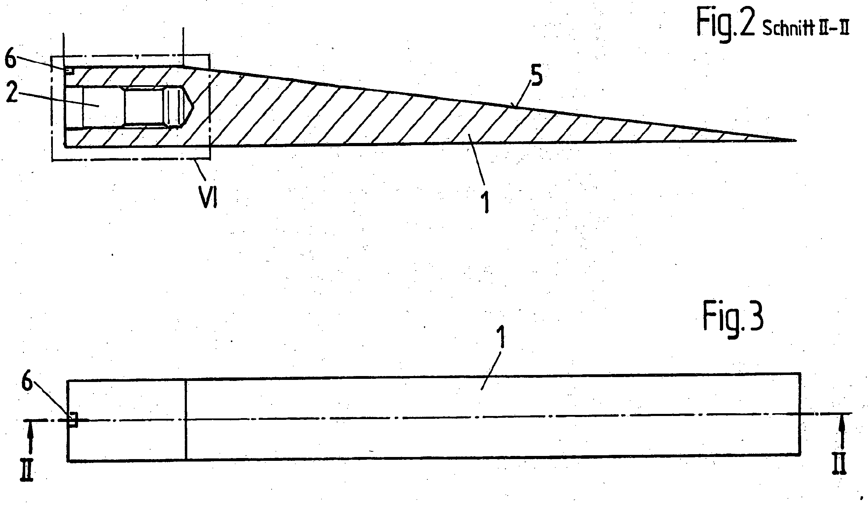

Fig. 2 zeigt einen Längsschnitt durch ein Ausführungsbeispiel eines erfindungsgemäßen Befestigungselementes 1 entlang einer in der Fig. 3 mit II - II bezeichneten Linie. Gleiche Bauelemente sind, wie auch in den übrigen Figuren, mit denselben Bezugszahlen gezeichnet.

In der Fig. 2 ist insbesondere die Bohrung 2 in einer Schnittansicht zu sehen, wie auch eine zweite, kleinere Bohrung 6 für eine eventuelle Passschraube. Außerdem ist in der Fig. 2 zu erkennen, dass sich das Befestigungselement 1 zu seinem freien Ende hin vorzugsweise entlang einer Schräge 5 verjüngt, die vorzugsweise an der radial inneren Seite des Befestigungselementes 1 bezüglich des Kreisbogens angeordnet ist.

Fig. 3 zeigt eine Draufsicht auf das Befestigungselement 1 gemäß Fig. 2.

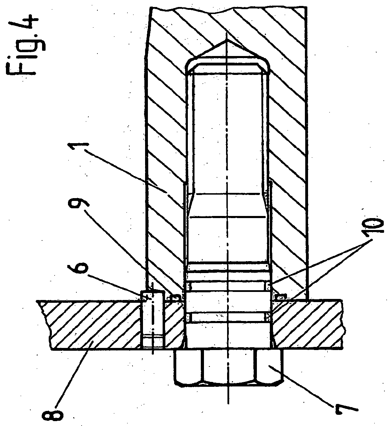

Fig. 4 zeigt eine Ausschnittvergrößerung des in Fig. 2 umrahmten Ausschnittes IV. Aus dieser Fig. 4 ist zu entnehmen, wie das Befestigungselement 1 mittels einer Befestigungsschraube 7 zur Befestigung des Blattanschlusses an einer Nabe und / oder eventuell auch bei der Fertigung des Blattanschlusses an einer flanschartigen Halterung 8 befestigt sein könnte. Auch eine eventuelle Passschraube in der Bohrung 6 ist angedeutet, sowie eventuelle umlaufende Nuten 9, 10 für Dichtungen.

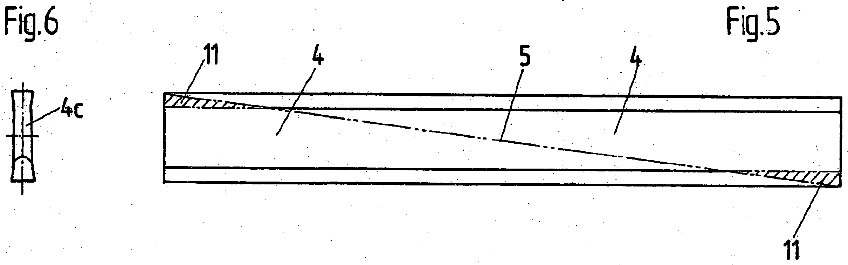

Fig. 5 zeigt eine Seitenansidht eines Fertigungszuschnittes für ein Ausführungsbeispiel erfiridungsgemäßer Abstandselemente 4. Die Abstandsetemente 4 sind länglich ausgebildet und vejüngen sich ebenfalls ehtlang einer Schräge 5. Es sind daher puriktgespiegelt jeweils zwei Abstatldselemente 4, wie gezeigt, äüs einem Zuschnitt zu schneiden, wobei nur wenig Verschnitt 11 anfällt. Ein ähnlicher Zuschnitt könnte eventuell auch für die Befestigungselemente 1 möglich sein.

Fig. 6 zeigt ein drittes Ausführungsbeispiel 4c einer Stirnseite eines Abstandsetementes, die etwa doppel-hufnagelförmig aussieht. Entsprechend könnte zum Beispiel auch eine doppel-T-förmige Stimansicht in Betracht kommen. Derartige Profile kommen insbesondere dann in Betracht, wenn die Befestigungselemente 1 mehr eine trapezförmige Stirnfläche zeigen, so dass bei der Anordnung der Abstandselermente 4 und der Befestigungselemente 1 sich leichter eine Kreisform ergibt.

## Patentansprüche

1. Verfahren zur Fertigung eines Blattanschlusses eines Rotorblattes für eine Windenergieanlage, der auf einem Kreisbogen vorzugsweise äquidistant zueinander vorgesehene Befestigungselemente (1) zur Befestigung des Blattanschlusses an einer Nabe aufweist, **dadurch gekennzeichnet, dass** stückig ausgebildete Befestigungselemente (1) verwendet werden und die Befestigungselemente (1) einen im Wesentlichen etwa viereckigen, vorzugsweise etwa rechteckigen, insbesondere quadratischen Querschnitt in einer Anschlussebene oder parallel dazu aufweisen oder einen trapezförmigen Querschnitt mit einer zum Kreisbogen radial inneren verjüngten Seite aufweisen und auf dem Kreisbogen angeordnet werden und
mit im Wesentlichen leistenförmigen Abstandselementen (4a, 4b), die etwa senkrecht zur Anschlussebene orientiert werden und einen etwa T-förmigen oder hufnagelförmigen oder etwa trapezförmigen Querschnitt aufweisen,
voneinander beabstandet werden.

2. Verfahren nach Anspruch 1, **dadurch gekennzeichnet, dass** jeweils zwei zueinander benachbarte Befestigungselemente mit einem Abstandselement voneinander beabstandet werden und ein Befestigungselement verwendet wird, das einen im Wesentlichen etwa viereckigen, vorzugsweise rechteckigen, insbesondere quadratischen Querschnitt in einer Anschlussebene oder parallel dazu aufweist oder einen trapezförmigen Querschnitt mit einer zum Kreisbogen radial inneren verjüngten Seite aufweist, wobei insbesondere ein im Wesentlichen etwa leistenförmiges Abstandselement verwendet wird, das etwa senkrecht zu einer Anschlussebene orientiert wird und insbesondere einen T-förmigen, hufnagelförmigen oder trapezförmigen Querschnitt aufweist.

3. Verfahren nach einem der Ansprüche 1 oder 2, **dadurch gekennzeichnet, dass** die Anordnung aus Befestigungselementen und Abstandselementen durch Laminieren miteinander verbunden wird und insbesondere (nur) an der radial inneren Seite und an der radial äußeren Seite der Anordnung ein Laminat angeordnet wird.

4. Verfahren nach einem der Ansprüche 1, 2 oder 3, **dadurch gekennzeichnet, dass** wenigstens ein Befestigungselement und wenigstens ein Abstandselement mit einer Harzfüllung in einem von ihnen gebildeten Zwischenraum miteinander verbunden werden.

5. Verfahren nach einem der vorhergehenden Ansprüche, **dadurch gekennzeichnet, dass** als Kreisbogen für den Blattanschluss ein geschlossener Kreis oder ein Segment davon, insbesondere ein Halbkreis, gewählt wird und das Rotorblatt, je nach Kreisbogen des Blattanschlusses, einen Blattanschluss oder mehrere derartige Blattanschlüsse erhält, derart, dass das fertige Rotorblatt eine vollkreisige Anschlusswurzel für den Anschluss an eine Nabe aufweist.

6. Verfahren nach einem der vorhergehenden Ansprüche, **dadurch gekennzeichnet, dass** der Blattanschluss von einer Anschlussebene in Rotorblattspitzenrichtung unsymmetrisch bezüglich einer Kreisbogenachse ausgebildet wird und insbesondere das Einbau- oder Anbauteil in seinem freien Endbereich bereits einen Teil einer Tragflächen- oder Flügelform bereitstellt.

7. Verfahren nach einem der vorhergehenden Ansprüche, **dadurch gekennzeichnet, dass** der Blattanschluss bei seiner Fertigung wenigstens in einem Teilbereich mit einer Abreißfolie versehen wird, die nach ihrem Wiederabreißen eine kontinuierliche, aber raue Oberfläche hinterlässt, die weiterbehandelbar, insbesondere lackierbar ist.

8. Blattanschluss eines Rotorblattes für eine Windenergieanlage, der auf einem Kreisbogen vorzugsweise äquidistant zueinander vorgesehene Befestigungselemente (1) zur Befestigung des Blattanschlusses an einer Nabe aufweist, **dadurch gekennzeichnet, dass** stückig ausgebildete Befestigungselemente (1), die einen im Wesentlichen etwa viereckigen, vorzugsweise etwa rechteckigen, insbesondere quadratischen Querschnitt in einer Anschlussebene oder parallel dazu aufweisen oder einen trapezförmigen Querschnitt mit einer zum Kreisbogen radial inneren verjüngten Seite aufweisen,
auf dem Kreisbogen angeordnet und mit im Wesentlichen leistenförmigen Abstandselementen (4a, 4b), die etwa senkrecht zur Anschlussebene orientiert sind und einen etwa T-fömigen oder hufnagelförmigen oder etwa trapezförmigen Querschnitt aufweisen,
voneinander beabstandet sind.

9. Blattanschluss nach Anspruch 8, **dadurch gekennzeichnet, dass** die Anordnung aus Befestigungselementen und Abstandselementen durch Laminieren miteinander verbunden ist und insbesondere (nur) an der radial inneren Seite und an der radial äußeren Seite der Anordnung ein Laminat angeordnet ist.

10. Blattanschluss nach einem der Ansprüche 8 oder 9, **dadurch gekennzeichnet, dass** wenigstens ein Befestigungselement und wenigstens ein Abstandselement mit einer Harzfüllung in einem von ihnen gebildeten Zwischenraum miteinander verbunden sind.

11. Blattanschluss nach einem der Ansprüche 8, 9 oder 10, **dadurch gekennzeichnet, dass** der Blattanschluss kreisbogenförmig als ein geschlossener Kreis oder ein Segment davon, insbesondere als ein Halbkreis, ausgebildet ist und ein Rotorblatt, je nach Kreisbogen des Blattanschlusses, einen Blattanschluss oder mehrere derartige Blattanschlüsse umfasst, derart, dass das fertige Rotorblatt eine vollkreisige Anschlusswurzel für den Anschluss an eine Nabe aufweist.

12. Blattanschluss nach einem der Ansprüche 8 bis 11, **dadurch gekennzeichnet, dass** der Blattanschluss von einer Anschlussebene in Rotorblattspitzenrichtung unsymmetrisch bezüglich der Kreisbogenformachse ausgebildet ist und das Einbau- oder Anbauteil in seinem freien Endbereich bereits einen Teil einer Tragflächen- oder Flügelform bereitstellt.

13. Blattanschluss nach einem der Ansprüche 8 bis 12, **dadurch gekennzeichnet, dass** der Blattanschluss bei seiner Fertigung wenigstens in einem Teilbereich mittels einer Abreißfolie durch deren Wiederabreißen eine kontinuierliche, aber raue Oberfläche aufweist, die weiterbehandelbar, insbesondere lackierbar ist.

## Claims

1. A process for manufacturing a blade connection of a rotor blade for a wind energy system which comprises fastening elements (1) for fastening the blade connection to a hub, which fastening elements are provided on a circular arc, preferably equidistant from each other, **characterized in that**
fastening elements (1) formed in pieces are used and the fastening elements (1) have a substantially approximately square, preferably rectangular, in particular quadratic cross section in a connection plane or prallel to it or a trapezoidal cross section with a side that tapers radially inward to the circular arc and they are arranged on a circular arc and
with substantially strip-shaped spacer elements (4a, 4b), which are oriented approximately vertically to the connection plane having an approximately T-shaped or horseshoe-shaped or approximately trapezoidal cross section the fastening elements (1) are spaced from each other.

2. Process according to Claim 1, **characterized in that** each two fastening elements adjacent to one another are spaced from each other by a spacer element and a fastening element is used that has a substantially approximately square, preferably rectangular, in particular quadratic cross section in a connection plane or parallel to it or a trapezoidal cross section with a side that tapers radially inward to the circular arc,
wherein in particular a substantially approximately strip-shaped spacer element is used that is oriented approximately vertically to a connection plane and that has in particular a T-shaped, horseshoe-shaped or trapezoidal cross-section.

3. Process according to Claim 1 or 2, **characterized in that** the arrangement of fastening and spacer elements is connected with each other by lamination and that preferably a laminate is arranged (only) on the radially inner side and on the radially outer side of the arrangement.

4. Process according to Claim 1, 2 or 3, **characterized in that** at least one fastening element and at least one spacer element are connected to each other by a resin filling in an intermediate space formed by them.

5. Process according to one of the previous claims, **characterized in that** a closed circle or a segment of it, in particular a semicircle, is selected as circular arc for the blade connection and that the rotor blade receives a blade connection or several such blade connections as a function of the circular arc of the blade connection in such a manner that the finished rotor blade has a full-circle connection root for the connection to a hub.

6. Process according to one of the previous claims **characterized in that** the blade connection is designed asymmetrically from the connection plane in the direction of the tip of the rotor blade relative to an axis of a circular arc and that preferably the mounted part or added-on part already makes a part of a carrying surface form or wing form available in its free end area.

7. Process according to one of the previous claims, **characterized in that** the blade connection is provided with a tear-off foil at least in a partial area during its manufacture, which foil leaves a continuous but rough surface after it has been torn off that can be further treated, in particular lacquered.

8. Blade connection of a rotor blade for a wind energy system which comprises fastening elements (1) for fastening the blade connection to a hub, which fastening elements (1) are provided on a circular arc, preferably equidistant from each other, **characterized in that** fastening elements (1) formed in pieces which have a substantially approximately square, preferably approximately rectangular, in particular quadratic cross section in a connection plane or parallel to it or a trapezoidal cross section with a side that tapers radially inward to the circular arc are arranged on the circular arc
and they are spaced from each other with substantially strip-shaped spacer elements (4a, 4b) which are approximately vertically oriented to the connection plane and they have an approximately T-shaped or horseshoe-shaped or approximately trapezoidal cross section.

9. Blade connection according to Claim 8, **characterized in that** the arrangement of fastening elements and spacer elements is connected to each other by lamination and that in particular a laminate is arranged (only) on the radially inner side and on the radially outer side of the arrangement.

10. Blade connection according to Claim 8 or 9, **characterized in that** at least one fastening element and at least one spacer element are connected to each other by a resin filling in an intermediate space formed by them.

11. Blade connection according to one of Claims 8, 9 or 10, **characterized in that** the blade connection is designed in the manner of a circular arc as a closed circle or a segment of it, in particular as a semicircle and that the rotor blade according to the circular arc of the blade connection comprises a blade connection or several such blade connections in such a manner that the finished rotor blade has a full-circle connection root for the connection to a hub.

12. Blade connection according to one of the Claims 8 to 11, **characterized in that** the blade connection is designed asymmetrically from a connection plane in the direction of the tip of the rotor blade relative to the axis of the circular arc form and that the mounted part or added-on part already makes a part of a carrying surface form or wing form available in its free end area.

13. Blade connection according to one of the Claims 8 to 12, **characterized in that** the blade connection is provided with a tear-off foil at least in a partial area during its manufacture, which foil leaves a continuous but rough surface after it has been torn off that can be further treated, in particular lacquered.

## Revendications

1. Procédé de fabrication d'un raccord de pale d'une pale de rotor pour une éolienne, raccord qui présente des éléments de fixation (1), prévus sur un arc de cercle, de préférence de manière équidistante les uns par rapport aux autres, et destinés à fixer le raccord de pale à un moyeu, **caractérisé en ce que** l'on utilise des éléments de fixation (1) réalisés d'une seule pièce, et les éléments de fixation (1) présentent une section transversale sensiblement quadrangulaire, de préférence à peu près rectangulaire, et notamment carrée, dans un plan de raccordement ou parallèlement à celui-ci, ou une section trapézoïdale avec un côté radialement intérieur, rétréci en direction de l'arc de cercle, et sont disposés sur l'arc de cercle et sont espacés les uns des autres par des éléments d'écartement (4a, 4b) sensiblement en forme de baguettes, qui sont orientés à peu près perpendiculairement au plan de raccordement et présentent une section transversale à peu près en forme de T ou en forme de clou à ferrer ou à peu près trapézoïdale.

2. Procédé selon la revendication 1, **caractérisé en ce que** chaque fois deux éléments de fixation voisins sont espacés l'un de l'autre par un élément d'écartement, et on utilise un élément de fixation qui présente une section transversale sensiblement quadrangulaire, de préférence rectangulaire et notamment carrée, dans un plan de raccordement ou parallèlement à celui-ci, ou une section trapézoïdale, avec un côté radialement intérieur, rétréci en direction de l'arc de cercle, sachant que l'on utilise en particulier un élément d'écartement ayant sensiblement la forme d'une baguette , qui est orienté à peu près perpendiculairement à un plan de raccordement et présente notamment une section transversale en forme de T, de clou à ferrer ou de trapèze.

3. Procédé selon une des revendications 1 ou 2, **caractérisé en ce que** la structure constituée d'éléments de fixation et d'éléments d'écartement est assemblée par stratification et qu'en particulier un stratifié est disposé (uniquement) sur le côté radialement intérieur et sur le côté radialement extérieur de la structure.

4. Procédé selon une des revendications 1, 2 ou 3, **caractérisé en ce qu'**au moins un élément de fixation et au moins un élément d'écartement sont reliés entre eux à l'aide d'une charge de résine, dans un espace intermédiaire formé par eux.

5. Procédé selon une des revendications précédentes, **caractérisé en ce que** l'on choisit comme arc de cercle pour le raccord de pale un cercle fermé ou un segment de celui-ci, en particulier un demi-cercle, et, selon l'arc de cercle du raccord de pale, la pale de rotor reçoit un raccord de pale ou plusieurs raccords de pale de ce type, de telle sorte que la pale de rotor finie présente une base de raccordement à cercle entier, en vue du raccordement à un moyeu.

6. Procédé selon une des revendications précédentes, **caractérisé en ce que** le raccord de pale est formé de manière asymétrique par rapport à un axe d'arc de cercle, à partir d'un plan de raccordement et en direction de la pointe de la pale de rotor, et qu'en particulier, l'élément incorporé ou rapporté constitue déjà dans sa zone d'extrémité libre une partie d'une forme de surface portante ou de pale.

7. Procédé selon une des revendications précédentes, **caractérisé en ce que** lors de sa fabrication, le raccord de pale est doté, au moins dans une zone partielle, d'une feuille déchirable qui, après son déchirement, dégage une surface continue mais rugueuse qui peut être soumise à un traitement ultérieur et peut notamment être peinte.

8. Raccord de pale d'une pale de rotor pour une éolienne, raccord qui présente des éléments de fixation (1), prévus sur un arc de cercle, de préférence de manière équidistante les uns par rapport aux autres, et destinés à fixer le raccord de pale à un moyeu, **caractérisé en ce que** l'on utilise des éléments de fixation (1) réalisés d'une seule pièce, qui présentent une section transversale sensiblement quadrangulaire, de préférence à peu près rectangulaire, et notamment carrée, dans un plan de raccordement ou parallèlement à celui-ci, ou une section trapézoïdale avec un côté radialement intérieur, rétréci en direction de l'arc de cercle, et sont disposés sur l'arc de cercle et sont espacés les uns des autres par des éléments d'écartement (4a, 4b) sensiblement en forme de baguettes, qui sont orientés à peu près perpendiculairement au plan de raccordement et présentent une section transversale à peu près en forme de T ou en forme de clou à ferrer ou à peu près trapézoïdale.

9. Raccord de pale selon la revendication 8, **caractérisé en ce que** la structure composée d'éléments de fixation et d'éléments d'espacement est assemblée par stratification et qu'en particulier un stratifié est disposé (uniquement) sur le côté radialement intérieur et sur le côté radialement extérieur de la structure.

10. Raccord de pale selon une des revendications 8 ou 9, **caractérisé en ce qu'**au moins un élément de fixation et au moins un élément d'écartement sont reliés entre eux à l'aide d'une charge de résine, dans un espace intermédiaire formé par eux.

11. Raccord de pale selon une des revendications 8, 9 ou 10, **caractérisé en ce que** le raccord de pale est réalisé en forme d'arc de cercle, en tant que cercle fermé ou segment de celui-ci, en particulier de demi-cercle, et que, selon l'arc de cercle du raccord de pale, la pale de rotor comprend un raccord de pale ou plusieurs raccords de pale de ce type, de telle sorte que la pale de rotor finie présente une base de raccordement à cercle entier, en vue du raccordement à un moyeu.

12. Raccord de pale selon une des revendications 8 à 11, **caractérisé en ce que** le raccord de pale est formé de manière asymétrique par rapport à l'axe de l'arc de cercle, à partir d'un plan de raccordement et en direction de la pointe de la pale de rotor, et que l'élément incorporé ou rapporté constitue déjà dans sa zone d'extrémité libre une partie d'une forme de surface portante ou de pale.

13. Raccord de pale selon une des revendications 8 à 12, **caractérisé en ce que** lors de sa fabrication, le raccord de pale est doté, au moins dans une zone partielle, d'une feuille déchirable qui, après son déchirement, dégage une surface continue mais rugueuse qui peut être soumise à un traitement ultérieur et peut notamment être peinte.
